# EUROPÄISCHE PATENTSCHRIFT

(11) **EP 1 987 720 B1**
(45) Veröffentlichungstag und Bekanntmachung des Hinweises auf die Patenterteilung: **01.09.2010**
(21) Anmeldenummer: 08008288.6
(22) Anmeldetag: 30.04.2008
(51) Int. Cl.: A22C 11/12

(54) **Verfahren und Vorrichtung zum gesteuerten Verschliessen wenigstens eines Clips um einen füllgutfreien Zopfabschnitt einer schlauchförmigen Hülle an einem mit der Hülle umschlossenen Füllgutabschnitt**
Method and device for controlled closing of at least one clip around a braided section devoid of filling material of a tubular wrapper on a filling material section surrounded by the wrapper
Procédé et dispositif de fermeture commandée d'au moins un clip autour d'une section tressée exempte de produit de remplissage d'une enveloppe tubulaire sur une section de produit de remplissage enveloppé

(30) Priorität: 04.05.2007 DE 102007021047
(43) Veröffentlichungstag der Anmeldung: 05.11.2008
(73) Patentinhaber: Poly-clip System GmbH & Co. KG, 60489 Frankfurt am Main (DE)
(72) Erfinder: Hanten, Jürgen, 61231 Bad Nauheim (DE)
(74) Vertreter: Eisenführ, Speiser & Partner

(56) Entgegenhaltungen:
- EP-A- 0 900 528
- WO-A-00/20282
- DE-U1-202005 020 521
- US-A- 5 775 985

## Beschreibung

Die Erfindung betrifft ein Verfahren und eine Vorrichtung zum gesteuerten Verschließen wenigstens eines Clips um einen füllgutfreien Zopfabschnitt einer schlauchförmigen Hülle an einem mit der Hülle umschlossenen Füllgutabschnitt, bei dem der wenigstens eine Clip mit wenigstens einer Schließeinrichtung geschlossen wird, wobei aufeinanderfolgende Füllgutabschnitte mit einem bewegten Produktstrom des Füllgutes nacheinander gefüllt werden und dabei die Hülle aus einem Hüllenvorrat abgezogen wird.

Zur Steuerung des Setzens der Clips ist es bekannt, ein Füllstoppsignal der Füllmaschine oder einen Längenanschlag, welcher von dem sich bildenden Füllgutabschnitt, insbesondere Wurstprodukt, ausgelöst wird, zu benutzen.

Weiterhin ist aus der WO 00/20228 eine Verpackungsvorrichtung bekannt, mittels der Verschlussclips auf einem sich kontinuierlich bewegenden Verpackungsschlauch gesetzt werden. Die Vorrichtung weist hierzu eine Clipeinrichtung auf, die auf einem Rahmen parallel zur Bewegungsrichtung des Verpackungsschlauchs bewegbar ist. Die Clipeinrichtung wird von einer Kolbenanordnung zwischen einer Eingangs- und einer Ausgangsstation reversibel bewegt. Die mit der Kolbenanordnung verbundene Steuerung gibt dabei die Bewegungsgeschwindigkeit bzw. die Zeit für einen Bewegungszyklus der Clipeinrichtung vor.

Trotz kontinuierlicher Füllgeschwindigkeit kann aber die Abzugsgeschwindigkeit des Verpackungsschlauchs variieren, bspw. durch variierende Konsistenz des Füllguts. Eine weiterhin kontinuierliche Bewegung der Clipeinrichtung führt hier zu unterschiedlich großen Verpackungen.

Demgegenüber ist es Aufgabe der Erfindung, ein Verfahren und eine Vorrichtung der eingangs genannten Art zu schaffen, bei dem auch bei kontinuierlichem Füllvorgang ein exaktes Setzen des Clips ohne Beeinträchtigung des kontinuierlichen Füllvorganges erreicht wird.

Diese Aufgabe wird erfindungsgemäß beim Verfahren durch die Merkmale des Patentanspruches 1 und bei der Vorrichtung durch die Merkmale des Patentanspruches 10 gelöst. Die Unteransprüche beinhalten vorteilhafte Weiterbildungen der Erfindung.

Bei der Erfindung wird die Abzugsbewegung der schlauchförmigen Hülle aus dem Hüllenvorrat abgetastet und daraus ein Steuersignal für die Mitbewegung der wenigstens einen Schließeinrichtung mit dem Produktstrom des Füllgutes beim Füllen der jeweiligen Füllgutabschnitt gebildet.

Vorzugsweise wird bei der Abtastung die Abzugsgeschwindigkeit der schlauchförmigen Hülle bestimmt. Ferner wird die Mitbewegung der wenigstens einen Schließeinrichtung proportional zur Vorschubgeschwindigkeit des Produktstromes beim Füllen des Füllgutabschnittes gesteuert. Hierdurch erreicht man eine zur Füllgeschwindigkeit bzw. zur Vorschubgeschwindigkeit des sich bildenden Füllgutabschnitts, insbesondere Wurstproduktes, korrelierende Steuergröße. Auf der Basis dieser Geschwindigkeit wird die Bewegungsgeschwindigkeit der Schließeinrichtung bei der im wesentlichen parallel zur Bewegungsrichtung des Produktstromes erfolgenden Mitbewegung gesteuert. Bei Änderung der Abzugsgeschwindigkeit der Hülle aus dem Hüllenvorrat bzw. bei Änderung der Vorschubgeschwindigkeit des Produktstromes beim Befüllen der Hülle mit dem Füllgut ändert sich entsprechend auch das Steuersignal, mit welchem die Mitbewegung der Schließeinrichtung gesteuert wird.

In bevorzugter Weise kann in Abhängigkeit von der abgetasteten Abzugsbewegung der Hülle aus dem Hüllenvorrat die Mitbewegung einer Verdrängereinrichturig, welche den füllgutfreien Zopfabschnitt bildet, in Richtung der Vorschubbewegung des Produktstromes beim Füllen der Füllgutabschnitt gesteuert werden. Hierbei kann in der gleichen Weise, wie oben schon erläutert, ein Steuersignal, welches insbesondere proportional der Abzugsbewegung der Hülle bzw. der Vorschubgeschwindigkeit des Produktstromes ist, gebildet werden. Für die Mitbewegung der Verdrängereinrichtungen und der Schließeinrichtung kann ein gemeinsamer Antrieb oder ein Antrieb zur Erzeugung synchron aufeinander abgestimmter Bewegungen der Verdrängereinrichtungen und der Schließeinrichtung vorgesehen sein. Vorzugsweise erfolgt jedoch die Bewegungssteuerung der Verdrängereinrichtung und der Schließeinrichtung mit jeweils zugeordneten separaten Antrieben. Bei der Schließeinrichtung kann es sich um eine einfache Clipeinrichtung oder Doppelclipeinrichtung handeln.

Grundsätzlich kann die Abzugsgeschwindigkeit der schlauchförmigen Hülle über die gesamte Länge des sich bildenden Füllgutabschnitts, insbesondere des Wurstprodukts, gemessen werden. Da jedoch bei dem Eintauchen von Verdrängerscheren zur Ausbildung eines füllgutfreien Zopfabschnitts und/oder beim Überspreizen die Abzugsgeschwindigkeit eine Änderung erfährt, ist es weiterhin von Vorteil, wenn die Abzugsgeschwindigkeit nur über einen kurzen Zeitraum und/oder einen kurzen Längenabschnitt der schlauchförmigen Hülle bestimmt wird. Da der Füllstrom zumindest annähernd über den Füllvorgang konstant bleibt, kann mittels dieses kurzen Zeitabschnitts bzw. diesem kurzen Längenabschnitt und einer entsprechenden Steuerungs- bzw. Regelungslogik, insbesondere einer Fuzzylogik, ein Steuer- bzw. Regelsignal für die Mitbewegung der wenigstens einen Schließeinrichtung mit dem Produktstrom des Füllgutes beim Füllen der jeweiligen Füllgutabschnitte gebildet werden.

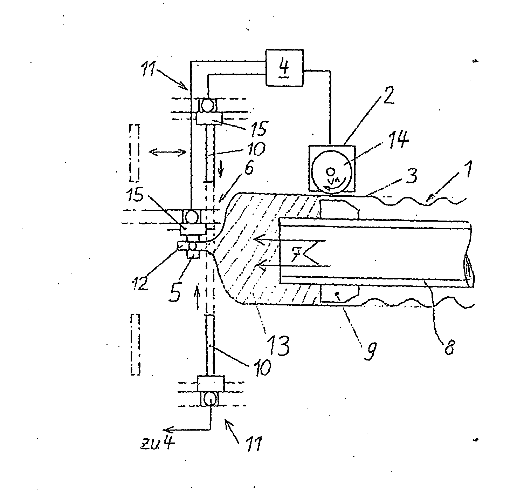

Anhand der Figur, welche schematisch die wesentlichen Bestandteile eines Ausführungsbeispiels darstellt, wird die Erfindung noch näher erläutert.

Das dargestellte Ausführungsbeispiel beinhaltet ein Füllrohr 8, über welches Füllgut in einem Produktstrom 7 in einen Füllgutabschnitt 13 mit einer bestimmten Vorschubgeschwindigkeit gefüllt wird. Der Füllgutabschnitt 13 wird von einer Hülle 3 umschlossen, welche aus einer Hüllenvorratseinrichtung 1, in welcher die Hülle 3 beispielsweise in Form einer Raupe vorliegt, beim Füllvorgang abgezogen wird. Zur Bildung eines an seinen jeweiligen Enden abgeschlossenen Füllgutabschnittes 13 sind Verdrängereinrichtungen 10 vorgesehen, von denen eine Verdrängereinrichtung dargestellt ist. Diese Verdrängereinrichtungen 10 bilden einen füllgutfreien Zopfabschnitt 12 am Anfang und am Ende des jeweiligen Füllgutabschnittes 13. In der Figur ist der Zopfabschnitt 12 am vorderen Ende des Füllgutabschnittes 13 dargestellt.

Im Bereich des Zopfabschnittes 12 wird mit Hilfe einer Schließeinrichtung 5, welche als Clipzange ausgebildet sein kann, ein Clip, welcher den Zopfabschnitt 12 umschlingt, geschlossen. Die Schließeinrichtung 5 kann auch als Doppel-Clipzange ausgebildet sein.

Für einen kontinuierlich ablaufenden Füllvorgang beim Befüllen aufeinanderfolgender Füllgutabschnitte 13, insbesondere Wurstprodukte, werden beim dargestellten Ausführungsbeispiel die Schließeinrichtung 5 und vorzugsweise auch die Verdrängereinrichtung 10 im wesentlichen parallel zur Vorschubrichtung des Produktstromes 7 mitbewegt. Zur Steuerung dieser Mitbewegung ist eine Abtasteinrichtung 2 vorgesehen, welche die Auszugsbewegung der Hülle 3 aus der Hüllenvorratseinrichtung 1 abtastet. Die Abtasteinrichtung kann hierzu ein Abtastrad 14 aufweisen, welches in Abhängigkeit von der Auszugsgeschwindigkeit der Hülle 3 mit einer bestimmten Drehzahl angetrieben wird. Ein elektrisches dieser Drehzahl proportionales Abtastsignal wird an eine Auswerteeinrichtung 4 geliefert. Diese Auswerteeinrichtung 4 kann als elektronische Rechnereinrichtung (Computer) ausgebildet sein. Für eine einwandfreie Messung der Auszugsgeschwindigkeit der Hülle 3 kann das Abtastrad 14 auf einen um das Füllrohr 8 angeordneten Spreizring 9, über welchen die Hülle 3 ausgezogen wird, aufgesetzt sein. Zwischen dem Spreizring 9 und dem Abtastrad 14 wird die Hülle 3 beim Füllvorgang aus einer Hüllenvorratseinrichtung 1 bewegt.

Die Auswerteeinrichtung 4 bildet aus dem Abtastsignal, insbesondere drehzahlproportionalen Abtastsignal ein Steuersignal, mit welchem eine Antriebseinrichtung 6 für die Schließeinrichtung 5 gesteuert wird. Die Antriebseinrichtung 6 bewirkt eine Bewegung der Schließeinrichtung 5 im wesentlichen parallel zur Vorschubrichtung des Produktstroms 7 beim Befüllen des Füllgutabschnittes 13 mit dem Füllgut. Die Antriebseinrichtung 6 kann hierzu beispielsweise ein von einem Elektromotor getriebenes Ritzel aufweisen, welches über ein Getriebe einen Schlitten 15 antreibt. Am Schlitten 15 ist die Schließeinrichtung 5 gelagert.

Der Schlitten 15 kann in einer zur Vorschubrichtung des Produktstroms 7 parallelen Längsführung geführt werden. Das Getriebe kann als Zahnriemengetriebe oder als Zahnstangengetriebe, welches am Schlitten 15 angreift und mit dem Antriebsritzel kämmt, ausgebildet sein. Die Steuerung des Elektromotors der Antriebseinrichtung 6 erfolgt mit dem von der Auswerteeinrichtung 4 gelieferten Steuersignal. Dieses Steuersignal bewirkt, dass die Schließeinrichtung 5 synchron mit der Vorschubbewegung des Füllgutabschnittes 13 beim Befüllen mitbewegt wird. Während dieser synchronen Mitbewegung erfolgt der Schließvorgang, den die Schließeinrichtung 5 am Clip durchführt, welcher beim Schließen den Zopfabschnitt zum Abdichten des Endes des Füllgutabschnittes 13 umschlingt.

Auch die Verdrängereinrichtung 10 kann eine zugeordnete Antriebseinrichtung 11 aufweisen, welche einen im wesentlichen gleichen Aufbau aufweist, wie die Antriebseinrichtung 6 für die Schließeinrichtung 5. Mit dieser Antriebseinrichtung 11 wird die Verdrängereinrichtung 10 ebenfalls synchron mit der Vorschubbewegung des Füllgutabschnittes 13 beim Befüllen mitbewegt.

Sobald der Schließvorgang, mit welchem der Clip mittels der Schließeinrichtung um den Zopfabschnitt 12 geschlossen wird, beendet ist, wird die Schließeinrichtung 5 und gegebenenfalls die Verdrängereinrichtung 10 in ihre jeweilige Ausgangsposition zurückgebracht, um am anderen Ende des Füllgutabschnittes 13 den Zopfabschnitt 12 zu bilden und auch das andere Ende des Füllgutabschnittes 13 durch Setzen und Schließen eines Clips mit Hilfe der Schließeinrichtung 5 zu verschließen. Auch dieser Vorgang erfolgt, wie oben beschrieben, in der Weise, dass die Schließvorrichtung 5 und gegebenenfalls die Verdrängereinrichtung 10 synchron mit der Vorschubbewegung des kontinuierlich durch das Füllrohr 8 gelieferten Produktstroms 7 mitbewegt wird. Auch die zweite, nicht näher dargestellte Verdrängereinrichtung wird in der beschriebenen Weise bewegt.

Diese gesteuerte Mitbewegung erfolgt, wie schon erläutert, in Abhängigkeit von der abgetasteten Abzugsbewegung der Hülle 3 über den Spreizring 9 und somit synchron mit der Vorschubbewegung des Produktstroms 7 beim Befüllen des jeweiligen Füllgutabschnittes 13 mit dem Füllgut.

### Bezugszeichenliste

- 1: Hüllenvorratseinrichtung
- 2: Abtasteinrichtung
- 3: Hülle
- 4: Auswerteeinrichtung
- 5: Schließeinrichtung
- 6: Antriebseinrichtung für die Schließeinrichtung
- 7: Produktstrom
- 8: Füllrohr
- 9: Spreizring
- 10: Verdrängereinrichtung
- 11: Antriebseinrichtung für Verdrängereinrichtung
- 12: Zopfabschnitt
- 13: Füllgutabschnitt
- 14: Abtastrad
- 15: Schlitten

## Patentansprüche

1. Verfahren zum gesteuerten Verschließen wenigstens eines Clips um einen füllgutfreien Zopfabschnitt (12) einer schlauchförmigen Hülle (3) an einem mit der Hülle umschlossenen Füllgutabschnitt (13), bei dem der wenigstens eine Clip mit wenigstens einer Schließeinrichtung (5) geschlossen wird, wobei aufeinanderfolgende Füllgutabschnitte mit einem bewegten Produktstrom (7) mit dem Füllgut gefüllt werden und dabei die Hülle aus einem Hüllenvorrat abgezogen wird,
**dadurch gekennzeichnet, dass** die Abzugsbewegung der Hülle (3) zwischen zwei aufeinander folgenden Verschließvorgängen über einen kurzen Zeit- und/oder Längenabschnitt abgetastet und daraus ein Steuersignal für die Mitbewegung der wenigstens einen Schließeinrichtung (5) mit dem Produktstrom (7) des Füllgutes beim Füllen des jeweiligen Füllgutabschnittes (13) gebildet wird und dass während dieser Mitbewegung der Clip um den füllgutfreien Zopfabschnitt (12) geschlossen wird.

2. Verfahren nach Anspruch 1, **dadurch gekennzeichnet, dass** bei der Abtastung die Abzugsgeschwindigkeit der schlauchförmigen Hülle bestimmt wird.

3. Verfahren nach Anspruch 1 oder 2, **dadurch gekennzeichnet, dass** das Steuersignal für die Mitbewegung der wenigstens einen Schließeinrichtung proportional der Vorschubbewegung des Produktstroms des Füllguts beim Befüllen des jeweiligen Füllgutabschnittes ist.

4. Verfahren nach einem der Ansprüche 1 bis 3, **dadurch gekennzeichnet, dass** die Mitbewegung der Schließeinrichtung eine zur Bewegungsrichtung des Produktstroms etwa parallele Bewegungskomponente aufweist.

5. Verfahren nach einem der Ansprüche 1 bis 4, **dadurch gekennzeichnet, dass** die Geschwindigkeit der Mitbewegung der Schließbewegung an die Vorschubgeschwindigkeit des Produktstroms des Füllgutes beim Füllen des jeweiligen Abschnitts angepasst ist.

6. Verfahren nach einem der Ansprüche 1 bis 5, **dadurch gekennzeichnet, dass** die jeweiligen aufeinanderfolgenden Füllgutabschnitte mit einem kontinuierlich bewegten Produktstrom des Füllgutes gefüllt werden.

7. Verfahren nach einem der Ansprüche 1 bis 6, **dadurch gekennzeichnet, dass** ferner die Mitbewegung einer am Ende des Zopfabschnittes befindlichen Verdrängereinrichtung, mit welcher der jeweils füllgutfreie Zopfabschnitt gebildet wird, ebenfalls in Abhängigkeit von der abgetasteten Abzugsbewegung der schlauchförmigen Hülle gesteuert wird.

8. Verfahren nach einem der Ansprüche 1 bis 7, **dadurch gekennzeichnet, dass** die Mitbewegung der Verdrängereinrichtung mit dem gleichen Steuersignal gesteuert wird, wie die Schließeinrichtung.

9. Verfahren nach einem der Ansprüche 1 bis 8, **dadurch gekennzeichnet, dass** die wenigstens eine Schließeinrichtung und die Verdrängereinrichtung mittels jeweils zugeordneter separater Antriebe mit dem Produktstrom beim Füllen des jeweiligen Füllgutabschnittes mitbewegt werden.

10. Vorrichtung zum gesteuerten Verschließen wenigstens eines Clips um einen füllgutfreien Zopfabschnitt (12) einer schlauchförmigen Hülle (3) am Ende eines mit der Hülle umschlossenen Füllgutabschnittes (13) mit einer Schließeinrichtung (5), welche den wenigstens einen Clip den Zopfabschnitt umfassend schließt, und einer Hüllenvorratseinrichtung (1), aus welcher die Hülle beim Füllen aufeinanderfolgender Füllgutabschnitte mit einem bewegten Produktstrom (7) des Füllgutes abgezogen wird,
**dadurch gekennzeichnet, dass** eine Abtasteinrichtung (2) vorgesehen ist, welche die Abzugsbewegung der Hülle (3) aus der Hüllenvorratseinrichtung (1) zwischen zwei aufeinander folgenden Verschließvorgängen über einen kurzen Zeit- und/oder Längenabschnitt abtastet und ein entsprechendes Abtastsignal bildet, das eine Arretiereinrichtung (4), welche aus dem Abtastsignal ein Steuersignal bildet, an die Abtasteinrichtung (2) angeschlossen ist und dass die Schließeinrichtung (5) mit einer Antriebseinrichtung (6) verbunden ist, welche die Schließeinrichtung (5) im wesentlichen parallel zur Vorschubbewegung des Produktstroms (7) gesteuert vom Steuersignal mitbewegt.

11. Vorrichtung nach Anspruch 10, **dadurch gekennzeichnet, dass** das Steuersignal proportional zur Abzugsgeschwindigkeit der Hülle (3) und/oder zur Vorschubgeschwindigkeit des Produktstroms (7) ist.

12. Vorrichtung nach Anspruch 10 oder 11, **dadurch gekennzeichnet, dass** das Schließen des wenigstens einen Clips um den Zopfabschnitt (12) während der synchronen Mitbewegung der Schließeinrichtung (5) mit dem Produktstrom (7) beim Füllen des Füllgutabschnittes (13) erfolgt.

13. Vorrichtung nach einem der Ansprüche 10 bis 12, **dadurch gekennzeichnet, dass** ferner eine Antriebseinrichtung (11) für wenigstens eine Verdrängereinrichtung (10) vorgesehen ist, mit welcher die Verdrängereinrichtung im wesentlichen parallel zur Vorschubrichtung des Produktstroms (7) in Abhängigkeit vom Abtastsignal der Abtasteinrichtung (2) mitbewegt wird.

14. Vorrichtung nach einem der Ansprüche 10 bis 13, **dadurch gekennzeichnet, dass** die Schließeinrichtung (5) und die Verdrängereinrichtung (10) nach Beendigung des Clip-Schließvorgangs durch ihre zugeordnete Antriebseinrichtungen (6, 11) in ihre Ausgangspositionen zurückbewegt sind.

## Claims

1. A method for controlled closing of at least one clip around a filling material free braided section (12) of a tubular wrapping (3) on a filling material section (13) enclosed by the wrapping, during which method the at least one clip is closed by at least one closing device (5), wherein consecutive filling material sections are being filled with the filling material by means of a moving product stream (7) thereby pulling off the wrapping from a wrapping supply,
**characterized by** sensing the pull-off movement of the wrapping (3) between two consecutive closing operations over a short time segment and/or length and forming a control signal from it for a co-motion of the at least one closing device (5) with the product stream (7) of the filling material during filling of the corresponding filling material section (13), and closing the clip around the filling material free braided section (12) during said co-motion.

2. The method according to claim 1, **characterized in that** a pull-off speed of the tubular wrapping is determined during said sensing.

3. The method according to claim 1 or 2, **characterized in that** said control signal for the co-motion of the at least one closing device is proportional to the feed motion of the product stream of the filling material during filling of the respective filling material section.

4. The method according to any one of the claims 1 to 3, **characterized in that** said co-motion of the closing device has a motion component substantially parallel with the motion direction of the product stream.

5. The method according to any one of the claims 1 to 4, **characterized in that** the speed of said co-motion of the closing motion is adapted to a feed speed of the product stream of the filling material during filling of the respective section.

6. The method according to any one of the claims 1 to 5, **characterized in that** respective consecutive filling material sections are being filled with a continuously moving product stream of the filling material.

7. The method according to any one of the claims 1 to 6, **characterized in that** further a co-motion of a displacement device provided at the end of the braided section and used to form the respectively filling material free braided section, is also being controlled depending on said sensed pull-off motion of the tubular wrapping.

8. The method according to any one of the claims 1 to 7, **characterized in that** said co-motion of said displacement device is being controlled by the same control signal as said closing device.

9. The method according to any one of the claims 1 to 8, **characterized in that** said at least one closing device and said displacement device are being co-moved with the product stream by means of respectively associated separate drives during filling of the respective filling material section.

10. A device for controlled closing of at least one clip around a filling material free braided section (12) of a tubular wrapping (3) at the end of a filling material section (13) enclosed by the wrapping, using a closing device (5), which is closing said at least one clip while embracing the braided section, and a wrapping supply device (1) from which the wrapping is being pulled off during filling of consecutive filling material sections with a moving product stream (7) of the filling material,
**characterized in that** a sensing device (2) is provided which is sensing a pull-off motion of the wrapping (3) from said wrapping supply device (1) between two consecutive closing operations over a short time segment and/or length and forming a corresponding control signal from it, that a locking device (4) forming a control signal from the sensing signal is connected to the sensing device (2), and that the closing device (5) is connected to a driving device (6) which is co-moving the closing device (5) substantially parallel with the feed motion of the product stream (7), controlled by the control signal.

11. The device according to claim 10, **characterized in that** said control signal is proportional to the pull-off speed of the wrapping (3) and/or to the feed speed of the product stream (7).

12. The device according to claim 10 or 11, **characterized in that** closing of the at least one clip around the braided section (12) is being effected during a synchronous co-motion of the closing device (5) with the product stream (7) when filling the filling material section (13).

13. The device according to any one of the claims 10 to 12, **characterized in that** further a driving device (11) is provided for at least one displacement device (10) with which said displacement device is being co-moved substantially parallel to the feed direction of the product stream (7) depending on the sensing signal of said sensing device (2).

14. The device according to any one of the claims 10 to 13, **characterized in that** said closing device (5) and said displacement device (10) have been moved back to their starting positions by their associated driving devices (6, 11) after completion of the clip closing operation.

## Revendications

1. Procédé de fermeture commandé d'au moins une agrafe autour d'une section (12) tressée, exempte de produit de remplissage, d'une enveloppe en forme de gaine sur une section (13) de produit de remplissage entourée de l'enveloppe, dans lequel on ferme la au moins une agrafe par au moins un dispositif (5) de fermeture, des sections successives de produit de remplissage étant remplies du produit de remplissage par un courant (7) de produit en déplacement et l'enveloppe étant retirée d'une réserve d'enveloppe,
**caractérisé en ce que** l'on détecte le mouvement de retrait de l'enveloppe (3) entre deux opérations de fermeture successives sur un court segment de temps et/ou de longueur et on en forme un signal de commande pour le codéplacement du au moins un dispositif (5) de fermeture avec le courant (7) du produit de remplissage lors du remplissage de la section (13) respective du produit de remplissage et **en ce que** l'on ferme pendant ce mouvement l'agrafe autour de la section (12) tressée exempte de produit de remplissage.

2. Procédé suivant la revendication 1, **caractérisé en ce que** pour la détection, on détermine la vitesse et du retrait de l'enveloppe en forme de gaine.

3. Procédé suivant la revendication 1 ou 2, **caractérisé en ce que** le signal de commande pour le codéplacement du au moins un dispositif de fermeture est proportionnel à l'avance du courant du produit de remplissage lors du remplissage de la section respective de produit de remplissage.

4. Procédé suivant l'une des revendications 1 à 3, **caractérisé en ce que** le codéplacement du dispositif de fermeture a une composante de déplacement à peu près parallèle à la direction de déplacement du courant du produit.

5. Procédé suivant l'une des revendications 1 à 4, **caractérisé en ce que** la vitesse du codéplacement du dispositif de fermeture est adaptée à la vitesse d'avance du courant du produit de remplissage lors du remplissage de la section respective.

6. Procédé suivant l'une des revendications 1 à 5, **caractérisé en ce que** l'on remplit les sections de produit de remplissage successives par un courant du produit de remplissage en déplacement continuel.

7. Procédé suivant l'une des revendications 1 à 6, **caractérisé en ce que** l'on commande en outre le codéplacement dans le dispositif de refoulement, qui se trouve à l'extrémité de la section tressée et par lequel la section exempte de produit de remplissage respective est formée, est commandée également en fonction du mouvement de retrait détecté de l'enveloppe en forme de gaine.

8. Procédé suivant l'une des revendications 1 à 7, **caractérisé en ce que** l'on commande le codéplacement du dispositif de refoulement par le même signal de commande que le dispositif de fermeture.

9. Procédé suivant l'une des revendications 1 à 8, **caractérisé en ce que** le au moins un dispositif de fermeture et de refoulement sont codéplacés avec le courant de produit lors du remplissage de la section respective de produit de remplissage au moyen d'entraînements distincts associés respectivement.

10. Dispositif de fermeture commandé d'au moins une agrafe autour d'une section (12) tressée, exempte de produit de remplissage, d'une enveloppe (3) en forme de gaine à l'extrémité d'une section (13) de produit de remplissage entourée de la gaine, comprenant un dispositif (5) de fermeture qui ferme la au moins une agrafe en entourant la section tressée et un dispositif (1) de réserve d'enveloppe dont la gaine est retirée lors du remplissage de sections successives du produit de remplissage avec un courant (7) en déplacement du produit de remplissage,
**caractérisé en ce qu'**il est prévu un dispositif (2) de détection qui détecte le déplacement de l'enveloppe sortant du dispositif (1) de réserve entre deux opérations successives de fermeture sur un court segment de temps et/ou de longueur et forme un signal de détection correspondant **en ce qu'**un dispositif (4) d'arrêt, qui forme un signal de commande à partir du signal de détection, est raccordé au dispositif (2) de détection et **en ce que** le dispositif (5) de fermeture est relié à un dispositif (6) d'entraînement qui, en étant commandé par le signal de commande, codéplace le dispositif (5) de fermeture sensiblement parallèlement au déplacement d'avance du courant (7) de produit.

11. Dispositif suivant la revendication 10, **caractérisé en ce que** le signal de commande est proportionnel à la vitesse de retrait de l'enveloppe (3) et/ou à la vitesse d'avance du courant (7) de produit.

12. Dispositif suivant la revendication 10 ou 11, **caractérisé en ce que** la fermeture de la au moins une agrafe autour de la section (12) tressée, pendant le codéplacement du dispositif (5) de fermeture en synchronisme avec le courant (7) de produit s'effectue lors du remplissage de la section (13) de produit de remplissage.

13. Dispositif suivant l'une des revendications 10 à 12, **caractérisé en ce qu'**il est prévu, en outre, un dispositif (11) d'entraînement d'au moins un dispositif (10) de refoulement, par lequel le dispositif de refoulement est codéplacé sensiblement parallèlement à la direction d'avance du courant (7) de produit en fonction du signal de détection du dispositif (2) de détection.

14. Dispositif suivant l'une des revendications 10 à 13, **caractérisé en ce que** le dispositif (5) de fermeture et le dispositif (10) de refoulement sont, après que l'opération de fermeture de l'agrafe est terminée, ramenés en leur position d'origine par leur dispositif (6, 11) d'entraînement associé.
